Europäisches Patentamt

European Patent Office

Office européen des brevets

(19)

(11) Publication number: **0 079 747**

**A1**

## (12) EUROPEAN PATENT APPLICATION

(21) Application number: **82305954.8**

(22) Date of filing: **09.11.82**

(51) Int. Cl.³: **B 60 R 9/04**
**B 60 P 7/06**

(30) Priority: **09.11.81 CA 389702**

(43) Date of publication of application:
**25.05.83 Bulletin 83/21**

(84) Designated Contracting States:
**AT BE CH DE FR GB IT LI LU NL SE**

(71) Applicant: **BIC CORPORATION**
**Wiley Street**
**Milford Connecticut(US)**

(72) Inventor: **Dallaire, Michel**
**4062 Wilson**
**Montreal Quebec, H4A 2T9(CA)**

(74) Representative: **Orchard, Oliver John**
**JOHN ORCHARD & CO. Staple Inn Buildings North High**
**Holborn**
**London WC1V 7PZ(GB)**

(54) Article securing device.

(57) The device (10) for securing articles above an outer surface of a vehicle and in relation to a closure element, such as a door (24, 24') or trunk lid of the vehicle. The device comprises an arresting element (11) having connection means (12, 13) for detachable securement to an attaching member (14) whereby a portion of the attaching member (14) may be secured in a joint formed between the closure element (24, 24') and a vehicle closure frame (23) with the attaching member (14) passing through the joint and the arresting element (11) fixedly secured to the attaching member (14) and being disposed internally of the vehicle.

Fig. 1

EP 0 079 747 A1

"ARTICLE SECURING DEVICE"

BACKGROUND OF INVENTION

(a)  Field of Invention

The present invention relates to a securing device for securing articles above an outer surface of a vehicle and in relation to a closure element, such as a door or trunk lid of the vehicle and wherein the securing device is adjustable for multiple use.

More specifically, the securing device of the present invention is of the type wherein an arresting element is a free element capable of being adjustably secured to an attaching member, such as a cable, and wherein securement is achieved by locking the closure element with the cable passing in the joint between the closure element, with the enlarged element being disposed internally of the vehicle.

(b)  Description of Prior Art

In U.S. patent No. 3,132,780 issued May 12, 1964 there is disclosed a vehicle carrying rack wherein a securing device of this general type is shown and comprises a steel cable having a button fixed at an end thereof with the other end of the cable being fixed to a carrying rack which is secured on a vehicle roof.  The cable and button forms part of the rack and it is adapted for passage between the lintels of the doors and the door frames of a vehicle.  The cable is adjustably attached to the rack to permit adjustment of the length of the end portion of the cable to provide adjustment for various makes of vehicles.

A disadvantage of this prior art type of securing device is that it is restricted for use with a specifically constructed carrying rack and cannot lock articles otherwise supported by the rack. Thus, the use of the securing device is restricted and cannot be adapted to secure other elements than the specific carrying rack and objects intended therefor.

## SUMMARY OF INVENTION

It is a feature of the present invention to provide a securing device which substantially overcomes the disadvantages of the prior art and which has multiple use.

Another feature of the present invention is to provide a securing device of the cable and arresting element type wherein the arresting element is detachably securable at any position along the cable.

Another feature of the present invention is to provide a securing device of the cable and arresting element type which is simple to use and which may be adapted for securing a multitude of articles above an outer surface of a vehicle in relation to a closure element of the vehicle, such as a door or trunk lid, etc.

Another feature of the present invention is to provide a securing device of the cable and arresting element type which is compact and easily storable, such as in a glove compartment of a vehicle and which is inexpensive.

According to the above features, from a broad aspect, the present invention provides a securing device for securing articles externally and in close proximity to a closure element, such as a door of a vehicle or house. The device comprises an arresting element having connection means for detachable securement to an attaching member whereby a portion of the attaching member may be located through a joint formed between the closure element and a frame with the arresting element, fixedly secured to the attaching member, being disposed internally of the closure element.

## BRIEF DESCRIPTION OF DRAWINGS

A preferred embodiment of the present invention will now be described with reference to the examples thereof as illustrated in the accompanying drawings, in which:

FIGURE 1 is a schematic illustration showing the securing device of the present invention in use securing an article on the rooftop of a vehicle;

FIGURES 2A, 2B and 2C are perspective views showing the manner in which the cable is adjustably secured to the spherical arresting element;

FIGURES 3A and 3B are side views, the latter being in cross-section, of the spherical arresting element showing the disposition of the through bores and the cable end receiving cavity; and

FIGURES 4A and 4B are schematic illustrations showing other uses of the securing device of the present invention.

## DESCRIPTION OF PREFERRED EMBODIMENTS

Referring now to the drawings there is shown generally at 10 the securing device of the present invention and it consists essentially of an arresting element 11 herein shown as a spherical shaped element having connection means constituted by two through bores 12 and 13 which are positioned to permit an attaching member, herein a cable 14 to be looped therethrough in a securement manner.

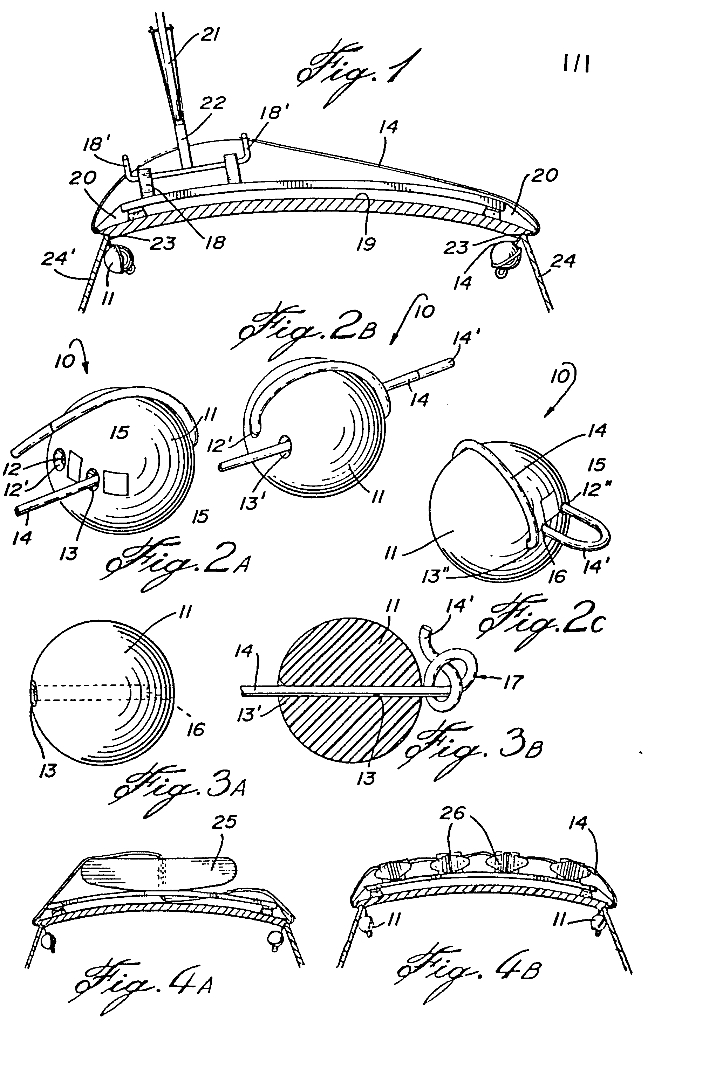

As shown in Figures 2A through 2C, the spherical element 11 is provided with sequential numeral designations 15 associated with ends 12' and 13' of the through bores 12 and 13 whereby the cable enters the bore 13 in the end designated "1" and out the rear end 13" and brought forward around the spherical element 11 to the front end 12' of the second through bore 12 and out its rear end 12". A cable end receiving cavity 16 is further provided in close proximity to the rear ends 12" and 13" of the through bores for retention therein of the free end 14' of the cable 14. Thus, an end portion of the cable is looped, as shown in Figure 2C. The cable 14 as herein shown may be a steel cable or a solid Kevlar (registered trademark) cable having a plastic covering. By securing the end of the cable in the manner shown in Figure 2C, the free end is concealed to prevent interference with a person occupying the vehicle to which the securing device is attached to and thereby preventing injury.

As shown in Figures 3A and 3B the through bores 12 and 13 are of circular cross-section with the cable member being of a slightly smaller diameter for close sliding fit in the through bores. Also, the forward end 12' and 13' of the through bores have an enlarged inward conical taper to facilitate entry of the cable therethrough. Also, the through bores are spaced substantially parallel to one another and extend along the diametrical plane of the spherical shaped element 11.

It is pointed out that although the arresting element 11 is herein shown in the form of a sphere, it could be any other convenient shape. Also, the element is herein shown as a solid core element constructed of a rubber substance of medium density but the material may be selected from many other types of substances such as plastics, wood, etc. provided it does not cause damage to the vehicle when in use. Also, the attaching member 14 could be in the form of a strap with the through bores 12 and 13 being slotted bores. In addition, it is foreseen that the attachment means could be constituted by a single bore, such as shown in Figure 3B with the free end portion of the cable 14 being knotted, such as shown at 17. Thus, it is within the scope of this invention that the shape of the arresting element 11 be of different shapes and the attachment means be constituted differently than that of the preferred embodiments disclosed herein.

Referring now to Figures 1, 4A and 4B, there is shown the manner in which the securing device 10 is used. As shown, the attaching member or cable 14 is an elongated member which is passed through enclosed openings (not shown) but located at locations 18' of a rack 18 which is secured by fixation means 20 to a vehicle rooftop 19 in a manner as well known in the art. As shown, an article, such as a bicycle 21, is secured and supported by the rack 18 and the cable 14 is passed through a wheel 22 or other suitable part of such bicycle. An arresting spherical element 11 is then secured at a predetermined area adjacent the free ends of the cable 14 and such cable is then located depending over the cable vehicle closure frame 23 of the vehicle with the door 24 open and the spherical element 11 located below the frame 23. By closing the door 24 the cable 14 then becomes located in the joint formed between the door 24 and the closure frame 23. The spherical element 11 then becomes located inside the vehicle behind the door 24 thereby preventing the cable end from being freed. This procedure is repeated for the other end of the cable which is secured in the joint of the opposite door 24' of the vehicle. Of course, the cable could be looped through the rack 18 and the bicycle 21 with both free ends of the cable 14 and spherical elements 11 located in the joint of any single door of the vehicle. It is also pointed out that the cable can be secured by passing it through the top edge of the window in the door structure.

Figures 4A and 4B show other uses for the securing device. In Figure 4A a surf board 25 herein is being shown secured to a rooftop rack and locked by the cable 14. In Figure 4B the cable 14 is shown looped through the ski bindings provided on pairs of skis 26 supported on a rooftop ski rack. Many other applications of this securing device exist and the cable end and spherical elements may be conveniently secured in the joint of other closure elements, such as trunk lids, hood, etc., where the closure element is lockable. By locking the door, trunk lid or hood of a vehicle the cable and all of the articles looped thereby have become locked.

It is within the ambit of the present invention to cover any obvious modifications of the preferred embodiment described herein provided such modifications fall within the scope of the appended claims. It is foreseen that the closure element may be a door or window of a house and the securing device may be used to secure an article, such as a bicycle, externally of and in close proximity to such door or window.

## CLAIMS

1. A securing device (10) which may be used for securing articles above an outer surface of a vehicle and in relation to a closure element, such as a door (24,24') or a trunk lid of the vehicle, the device (10) being characterised in that it includes an arresting element (11) having connection means (12)(13) for detachably securing the element (11) to an attaching member (14), whereby a portion of the attaching member (14) may be located so that is passes through a joint formed between the closure element (24,24') and a vehicle closure frame (23), the arresting element (11) being secured to the attaching member (14) and being disposed internally of the closure element (24,24')

2. A securing device as claimed in claim 1, characterised in that the connection means (12)(13) comprises two spaced apart bores (12)(13) through the arresting element (11), the bores (12)(13) being positioned to permit the attaching member (14) to be looped therethrough.

3. A securing device as claimed in claim 2, characterised in that the bores (12)(13) are disposed substantially parallel to one another and extend along a major portion of said arresting element (11).

4. A securing device as claimed in either claim 2 or claim 3, characterised in that a common end (12')(13') of each of the bores (12)(13) has an inwardly extending conical taper.

5. A securing device as claimed in any one of claims 2 to 4, characterised in that a cable end receiving cavity (16) is provided in close proximity to a common end (12") (13") of each of the bores (12)(13) for the retention therein of a free end of the attaching member (14) looped through the bores (12)(13).

6. A securing device as claimed in any one of claims 2 to 5, characterised in that the bores (12)(13) are of circular cross-section, the attaching member (14) being a cable of circular cross-section which is a close sliding fit in the bores (12)(13).

7. A securing device as claimed in any one of the preceding claims, characterised in that sequential designation markings (15) are provided in an outer surface of the arresting element (11), each of the markings (15) being associated with a predetermined end of the bores (12)(13) whereby the attaching member (14) may be looped through the bores in a predetermined sequence.

8. A securing device as claimed in any one of the preceding claims, characterised in that the attaching member (14) is a cable.

9. A securing device as claimed in any one of claims 1 to 7, characterised in that the attaching member (14) is a strap.

10. A securing device for use in securing articles externally and in close proximity to a closure element (24,24') such as a door of a vehicle or of a house, characterised in that the device comprises an arresting element (11) having connection means (12)(13) for detachably securing the element (11) to an attaching member (14) whereby a portion of the attaching member (14) may be located so that it passes through a joint formed between the closure element (24,24') and a frame (23), the arresting element (11) being secured to the attaching member (14) and being disposed internally of the closure element (24,24').

0079747

1/1

Fig. 1

Fig. 2B

Fig. 2A

Fig. 2c

Fig. 3A

Fig. 3B

Fig. 4A

Fig. 4B

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 60 R    9/04 |
| X | US-A-4 253 594   (R.P. PARKS) <br> * Figure 2 * | 1 | B 60 P    7/06 |
| | --- | | |
| A | DE-A-2 740 790   (TEFA) <br><br> * Figure 1 * | | |
| | --- | | |
| A | AU-D-4 223 468   (J.F. GRAHAM) <br><br> * Figure 2 * | | |
| | --- | | |
| A | US-A-4 226 354   (R.R. ALLEN) <br><br> * Figure 2 * | | |
| | --- | | |
| D,A | US-A-3 132 780   (K.W. BINDING) | | |

**TECHNICAL FIELDS SEARCHED (Int. Cl. ³)**

B 60 J    1/00
B 60 P    7/00
B 60 R    9/00

-----

_The present search report has been drawn up for all claims_

| Place of search <br> BERLIN | Date of completion of the search <br> 21-01-1983 | Examiner <br> BECKER W D H |
|---|---|---|

EPO Form 1503. 03.82